# NEW EUROPEAN PATENT SPECIFICATION

(11) **EP 2 931 571 B2**
(45) Date of publication and mention of the opposition decision: **22.01.2025**
(45) Mention of the grant of the patent: 14.10.2020
(21) Application number: 13808181.5
(22) Date of filing: 10.12.2013
(51) Int. Cl.: B60T 8/18

(54) **TRAILER POWER SYSTEM**
ANHÄNGERSTROMVERSORGUNGSSYSTEM
SYSTÈME D'ALIMENTATION DE REMORQUE

(30) Priority: 13.12.2012 GB 201222443
(43) Date of publication of application: 21.10.2015
(73) Proprietor: Haldex Brake Products AB, 261 24 Landskrona (SE)
(72) Inventor: HARRISON, Dudley, John, Solihull West Midlands B90 4YP (GB)
(74) Representative: Forresters IP LLP
(86) International application number: PCT/GB2013/053252
(87) International publication number: WO 2014/091224

(56) References cited:
- EP-A1- 1 118 965
- EP-A2- 2 058 627
- WO-A1-01/51326
- WO-A1-2011/117595
- WO-A2-2005/107362
- CA-A- 1 030 249
- DE-A1- 3 714 193
- DE-U1- 9 215 061
- GB-A- 1 446 792
- GB-A- 2 473 688
- US-A- 1 861 770
- US-A- 4 033 630
- US-A- 5 949 147
- US-A1- 2008 162 968

## Description

### Description of Invention

THIS INVENTION relates to a trailer power system, and in particular to a power system for the trailer of an articulated heavy goods vehicle.

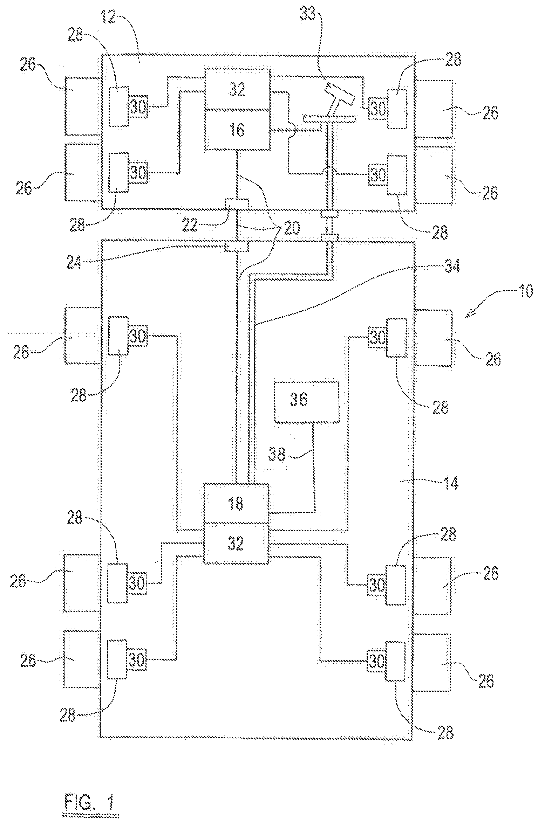

Figure 1 shows known features of a vehicle 10 which includes a tractor 12 and a trailer 14. The tractor 12 has a main braking electronic control unit (ECU) 16, together with a modulator 32. The tractor 12 has a plurality of wheels 26, each of which is provided with a brake 28, operated by an actuator 30. In this example, the actuators 30 are pneumatically operable, and are connected to a source of pressurised fluid (in this example compressed air) via the modulator 32. The modulator 32 is, in turn, controlled by an electrical signal input from the ECU 16.

Similarly, the trailer 14 has a trailer ECU 18 which sends control signals to a modulator 32. The trailer 14 also has a plurality of wheels 26, again each with a brake 28 which is operated by an actuator 30. As described above in relation to the tractor 12, each of the actuators 30 is connected to a source of pressurised fluid by the modulator 32.

A series of connecting cables 20 extends from the tractor ECU 16, via a tractor connector 22 and a trailer connector 24, to the trailer ECU 18. The connecting cables 20 comprise a data connection such as a CAN bus. From the tractor connector 22 to the trailer ECU 18 the connecting cables 20 also include power cables. When the tractor 12 and trailer 14 are connected, it will be understood that the trailer ECU 18 is powered from the power circuit of the tractor 12.

A telematics unit 36 is connected to the trailer ECU 18 by way of a connecting cable 38, which includes both a power cable and a data connection such as a CAN bus. The telematics unit 36 allows communication between the trailer ECU and a remote control centre, and is powered from the trailer ECU 18 via the connecting cable 38.

The tractor 12 also includes a brake pedal 33 which is connected to a pneumatic line 34, which is connected both to the tractor ECU 16 and to the trailer ECU 18.

The features described thus far are conventional.

An embodiment of data logging apparatus suitable for use in relation to such a vehicle 10 is described in GB 2473688. This document discloses a system including a data logging apparatus which has the ability to power the EBS unit from an independent power source, such as a rechargeable cell, when it detects that the EBS is in an unpowered condition, to obtain sensor data from the EBS, to obtain the time and/or data receipt of the data from a real time clock, and to store the sensor data, time and/or date in its memory. The data logging apparatus is programmed to obtain sensor data automatically on the basis of a duty cycle, as this enables data to be received from the sensor on the basis of a predetermined schedule.

US 2008/0162968 discloses a system and method for power management in the tracking system of a trailer.

The system in US 2008/0162968 includes a telematics unit which has a "wake" mode when the system is powered and available for remote communication, and a "sleep" mode in which the unit cannot communicate with a remote control centre. The unit assess the level of charge in its battery, and then determines how long it should remain in "wake" mode, and when it should switch to "sleep" mode, and for how long for.

It is an object of the present invention to provide an improved power system.

Accordingly, one aspect of the present invention provides a trailer comprising a power system, an electronic braking system (EBS) and a telematics unit having a battery, wherein a power connection is provided from the telematics unit to the EBS to provide power from the battery of the telematics unit to the EBS to power the EBS when the trailer is not connected to an external source of electrical power, characterised in that the trailer further comprises at least one sensor, and the powering of the EBS from the battery of the telematics unit is initiated in response to a signal from the sensor.

Advantageously, the battery is rechargeable and, when the trailer is connected to an external source of electrical power, may be charged from the external source of electrical power.

Preferably, the power system further comprises a control which may be operated by a user to trigger the powering of the EBS from the battery of the telematics unit.

Advantageously, the sensor is a weight or load sensor.

Preferably, the trailer has a load display, which is adapted to display information obtained from the EBS relating to a load on the trailer, and wherein the load display may be powered by the battery of the telematics unit.

Conveniently, the trailer comprises an alerting device, which may provide an alert in response to a predetermined event, and the alerting device may be powered by the battery of the telematics unit.

Advantageously, the predetermined event is an increase or decrease in the load sensed by a load sensor of the trailer.

Preferably, the EBS is powered by the battery of the telematics unit in response to a request received from an external control centre.

Conveniently, the request is received via the telematics unit.

Advantageously, the battery may power the EBS so that information may be transferred from the EBS to the telematics unit.

Preferably, the information is stored in a memory which is accessible by the EBS, and the EBS is powered by the battery so that the information can be retrieved.

Conveniently, the information is gathered by the EBS before being transferred to the telematics unit, and the EBS is powered by the battery so that the information can be gathered.

Advantageously, the power system further comprises a charge level sensor to measure the charge level of the battery of the telematics unit.

Preferably, the trailer EBS will not be powered by the battery of the telematics unit if the detected charge level of the battery of the telematics unit is below a predetermined level.

A further aspect of the present invention provides a method of powering a vehicle trailer comprising an electronic braking system (EBS) and a telematics unit having a battery, and a sensor, the method comprising the step, when the trailer is not connected to an external source of electrical power, of providing power from the rechargeable battery of the telematics unit to the EBS via a power connection to power the EBS, characterised in that the powering of the EBS from the battery of the telematics unit is initiated in response to a signal from the sensor.

In order that the present invention may be more readily understood embodiments thereof will now be described, by way of example, with reference to the accompanying drawings, in which:
Figure 1 shows a trailer including a power system embodying the present invention attached to a tractor; and
Figure 2 shows the trailer of figure 1 detached from the tractor.

Referring again to figure 1, it is common for the telematics unit 36 to contain a rechargeable battery, as well as GPS (location) and GSM (communication) modules. In normal use these modules are powered, and the battery is recharged, via the connecting cable 38 (although the battery may be charged by another route, for instance via the trailer's lighting circuit).

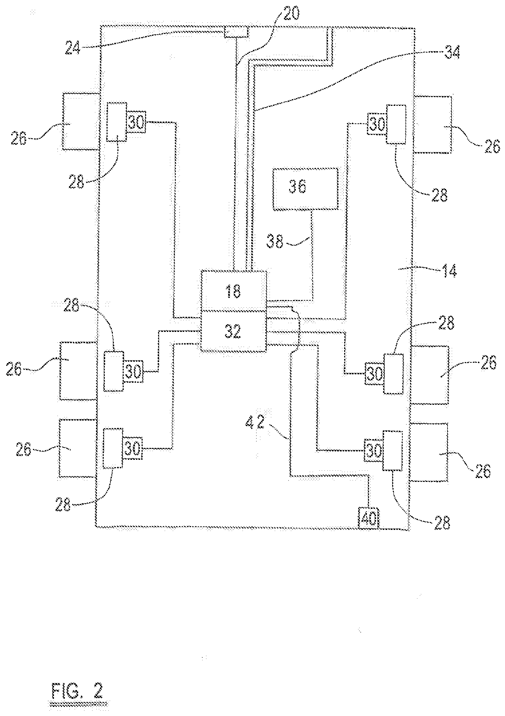

It is often the case that the trailer 14 is not attached to a tractor, or to any other external power source, as shown in figure 2. The telematics unit 36 may continue to operate for at least a limited time, powered from its internal rechargeable battery. This allows the telematics unit 36 to broadcast the position of the trailer 14 to the remote control centre.

In embodiments of the present invention, the trailer's electronic braking system (EBS), which comprises the trailer ECU 18 and the associated modulator 32, may be powered by the battery of the telematics unit 36, in particular when the trailer 14 is not connected to an external source of electrical power. It will be understood that power may be delivered from the battery of the telematics unit 36 to the trailer ECU 18 (or to another part of the trailer EBS) via the connecting cable 38.

The trailer EBS may be powered periodically, on request, and/or in response to a detected event, as described below.

In some embodiments a load display 40 is provided on the trailer 14, and in the embodiment shown in figure 2 the load display 40 is connected to the trailer ECU 18 by a cable 42. If the trailer EBS is powered by the telematics unit 36 during a loading operation when the trailer 14 is not connected to a tractor, this load display 40 may be powered from the trailer ECU 18, thus allowing the load on the trailer 14 to be seen and monitored as the loading operation proceeds.

Information as to the load on the trailer 14 may be derived, for example, from air bellows pressure sensors which are provided as part of the actuators 30, which are connected to the trailer EBS.

Usually, when a loading operation is carried out when a trailer is disconnected from a tractor, there is no electrical power to the trailer and therefore operators will generally be unable to monitor with any accuracy the load that is placed on the trailer. If a discovery is made that the trailer is overloaded when the trailer is first connected to a tractor, this may cause significant delays while the load is adjusted. Providing power to the EBS to operate the load display 40 when the trailer 14 is disconnected from a tractor is therefore useful and may potentially save significant amounts of time.

Figures 1 and 2 show a "full" trailer with axles at the front and rear. However, it should be understood that the invention applies equally to semi-trailers, which have axles at the rear and are supported at the front either by the towing tractor or by landing legs.

It is noted that a trailer of this type will usually be parked with its landing legs down, and so the signals from the air bellows pressure sensors may only give an indication of the weight on the trailer suspension at the rear. However, in many operations this will be sufficient to give an indication of the trailer bogie overload, as when the tractor is connected in general the front of the trailer will be at approximately the same height as when parked on its landing legs. This means that the load on the trailer bogie will be around the same as the load in the coupled condition.

In preferred embodiments the trailer EBS will be powered from the telematics unit 36 in response to a specific command from operators (e.g. a button on the load display 40 being pressed), or in response to a determination that the load on the trailer 14 has changed by more than a predetermined threshold, or in excess of a predetermined rate.

In addition to the above, it is known that, in some cases, a trailer parked on its landing legs can tip forward when a forklift truck loads a very heavy pallet of goods onto to the front of the trailer with no load installed at the rear. If the trailer EBS is powered during a loading phase, however, the suspension pressure can be monitored and an alarm can be activated if the apparent load at the rear of the trailer is reduced by more than a predetermined amount, or if the apparent load at the rear of the trailer decreases at a rate that is in excess of a predetermined threshold rate.

The alarm may comprise an audible signal such as a buzzer and/or a visual signal such as a light. Alternatively, or in addition, a load display, provided at a suitable location on the trailer, may be powered during this phase so that operators may monitor the load continuously.

Again, the powering of the trailer EBS during a loading phase may be activated by a specific command from an operator, or in response to a detected change in the load on the trailer.

In general it is envisaged that the trailer EBS will be powered by the telematics unit 36 for the minimum length of time, in order to conserve power in the battery of the telematics unit 36. The powering of the trailer EBS by the telematics unit 36 will, in preferred embodiments, cease upon a command from an operator (e.g. pressing on off switch) or if the detected load on the trailer 14 does not change (or changes by less than a threshold amount) for a predetermined length of time. Alternatively or in addition the powering of the EBS may stop after a predetermined length of time.

In a further example, a control centre may send a message to the telematics unit 36 of the trailer 14, requesting a transfer of data stored in the memory of the trailer EBS. In embodiments of the present invention, if a request of this nature is received and the trailer 14 is not connected to an external power source, the telematics unit 36 may power the trailer EBS, retrieve the requested data from the memory, and transmit it to the control centre via the GSM link. In other embodiments information such as suspension pressure may be gathered by the EBS for transmission, rather than being retrieved from the memory.

In this case, the powering of the trailer EBS by the telematics unit 36 will be initiated in response to the request from the control centre.

It is proposed that the telematics unit 36 will power the trailer EBS for only as long as is necessary to retrieve the requested data from the EBS memory.

In preferred embodiments of the invention a charge level sensor is provided in the telematics unit 36 (or elsewhere) to monitor the level of charge of the battery of the telematics unit 36. If the level of charge falls below a predetermined level, the telematics unit 36 may not power the vehicle EBS, to conserve power in order to fulfil the regular tasks of the telematics unit 36.

In alternative embodiments of the invention, the trailer EBS may be powered by the telematics unit 36 upon request, until the battery of the telematics unit 36 is entirely depleted.

In embodiments of the invention, a "battery low" signal may be provided to an operator when the telematics unit 36 powers the trailer EBS, when the level of charge in the battery of the telematics unit 36 is below a preset level.

The embodiments described above allow powering of the trailer EBS for particular tasks, while requiring minimum modification to the components of a known trailer system. In particular, the existing one-way power connection between the trailer EBS and the telematics unit 36 may be converted into a two-way power connection, and some hardware modification may be required in order to do so. In a conventional trailer there will already be a two-way data connection (e.g. a CAN bus) between the trailer EBS and the telematics unit 36, and it is therefore envisaged that little or no modification in this regard will be required.

In other embodiments of this invention, when the trailer 14 is not connected to an external source of electrical power the EBS may be powered via a USB cable, instead of by the battery of the telematics unit 36. For this to be possible a USB connection is provided at a suitable location on the trailer 14, which is readily accessible by an operator. The operator may connect to the trailer 14 a device such as a laptop computer, by plugging in a USB cable both to a USB socket on the laptop and to the trailer's USB connection. The EBS can be powered through this connection to gather or retrieve data, such as fault status or other parameters relating to the trailer, and the data can then be transmitted to the laptop through the USB cable.

It will be understood that this allows the EBS to be powered and interrogated in one simple step, using a standard type of connection. This makes it quick and easy for an operator to gather information from the trailer without using specialised equipment.

When used in this specification and claims, the terms "comprises" and "comprising" and variations thereof mean that the specified features, steps or integers are included. The terms are not to be interpreted to exclude the presence of other features, steps or components.

## Claims

1. A trailer comprising a power system, an electronic braking system (EBS) (18, 32) and a telematics unit (36) having a battery, wherein a power connection (38) is provided from the telematics unit (36) to the EBS to provide power from the battery of the telematics unit (36) to the EBS (18, 32) to power the EBS (18, 32) when the trailer is not connected to an external source of electrical power, **characterised in that** the trailer further comprises at least one sensor, and the powering of the EBS (18, 32) from the battery of the telematics unit (36) is initiated in response to a signal from the sensor.

2. A trailer according to claim 1, further comprising a control which may be operated by a user to trigger the powering of the EBS (18, 32) from the battery of the telematics unit (36).

3. A trailer according to claim 1 or 2, wherein the sensor is a weight or load sensor.

4. A trailer according to any preceding claim wherein the system has a load display, which is adapted to display information obtained from the EBS relating to a load on the trailer, and wherein the load display may be powered by the battery of the telematics unit (36).

5. A trailer according to any preceding claim wherein the trailer comprises an alerting device, which may provide an alert in response to a predetermined event, and the alerting device may be powered by the battery of the telematics unit (36).

6. A trailer according to claim 5, wherein the predetermined event is an increase or decrease in the load sensed by a load sensor of the trailer.

7. A trailer according to any preceding claim wherein the EBS (18, 32) is powered by the battery of the telematics unit (36) in response to a request received from an external control centre.

8. A trailer according to claim 7, wherein the request is received via the telematics unit (36).

9. A trailer according to any preceding claim wherein the battery powers the EBS (18, 32) so that information may be transferred from the EBS (18, 32) to the telematics unit (36).

10. A trailer according to claim 9 wherein the information is stored in a memory which is accessible by the EBS (18, 32), and the EBS (18, 32) is powered by the battery so that the information can be retrieved.

11. A trailer according to claim 9 or 10 wherein the information is gathered by the EBS (18, 32) before being transferred to the telematics unit (36), and the EBS (18, 32) is powered by the battery so that the information can be gathered.

12. A trailer according to any preceding claim further comprising a charge level sensor to measure the charge level of the battery of the telematics unit (36).

13. A trailer according to claim 8 wherein the EBS (18, 32) will not be powered by the battery of the telematics unit (36) if the detected charge level of the battery of the telematics unit (36) is below a predetermined level.

14. A method of powering a vehicle trailer (14) comprising an electronic braking system (EBS) (148, 32), a telematics unit (36) having a battery, and a sensor, the method comprising the step of, when the trailer (14) is not connected to an external source of electrical power, of providing power from the rechargeable battery of the telematics unit (36) to the EBS (18, 32) via a power connection to power the EBS (18, 32), **characterised in that** the powering of the EBS (18, 32) from the battery of the telematics unit (36) is initiated in response to a signal from the sensor.

## Patentansprüche

1. Anhänger, der ein Stromsystem, ein elektronisches Bremssystem EBS (18, 32) und eine Telematikeinheit (36) mit einer Batterie umfasst, wobei eine Stromverbindung (38) von der Telematikeinheit (36) zum EBS bereitgestellt ist, um Strom von der Batterie der Telematikeinheit (36) zum EBS (18, 32) bereitzustellen, um das EBS (18, 32) mit Strom zu versorgen, wenn der Anhänger nicht an eine externe Quelle elektrischen Stroms angeschlossen ist, **dadurch gekennzeichnet, dass** der Anhänger ferner zumindest einen Sensor umfasst, und die Stromversorgung des EBS (18, 32) von der Batterie der Telematikeinheit (36) als Antwort auf ein Signal vom Sensor ausgelöst wird.

2. Anhänger nach Anspruch 1, der ferner eine Steuereinheit umfasst, die von einem Benutzer betätigt werden könnte, um die Stromversorgung des EBS (18, 32) von der Batterie der Telematikeinheit (36) zu triggern.

3. Anhänger nach Anspruch 1 oder 2, wobei der Sensor ein Gewichts- oder Lastsensor ist.

4. Anhänger nach irgendeinem vorhergehenden Anspruch, wobei das System eine Lastanzeige hat, die angepasst ist, Information anzuzeigen, die vom EBS hinsichtlich einer Last auf dem Anhänger erhalten wurde, und wobei die Lastanzeige von der Batterie der Telematikeinheit (36) mit Strom versorgt werden könnte.

5. Anhänger nach irgendeinem vorhergehenden Anspruch, wobei der Anhänger eine Warnvorrichtung umfasst, die eine Warnung als Antwort auf ein vorbestimmtes Ereignis bereitstellen könnte, und die Warnvorrichtung durch die Batterie der Telematikeinheit (36) mit Strom versorgt werden könnte.

6. Anhänger nach Anspruch 5, wobei das vorbestimmte Ereignis eine Erhöhung oder Verringerung in der Last ist, die von einem Lastsensor des Anhängers abgetastet wurde.

7. Anhänger nach irgendeinem Anspruch, wobei das EBS (18, 32) von der Batterie der Telematikeinheit (36), als Antwort auf eine von einem externen Steuerzentrum empfangene Anforderung, mit Strom versorgt wird.

8. Anhänger nach Anspruch 7, wobei die Anforderung über die Telematikeinheit (36) empfangen wird.

9. Anhänger nach irgendeinem vorhergehenden Anspruch, wobei die Batterie das EBS (18, 32) mit Strom versorgt, sodass Information vom EBS (18, 32) zur Telematikeinheit (36) transferiert werden kann.

10. Anhänger nach Anspruch 9, wobei die Information in einem Speicher gespeichert wird, zu dem das EBS (18, 32) Zugang hat, und das EBS (18, 32) von der Batterie mit Strom versorgt wird, sodass die Information abgerufen werden kann.

11. Anhänger nach Anspruch 9 oder 10, wobei die Information vom EBS (18, 32) gesammelt wird, bevor sie zur Telematikeinheit (36) transferiert wird, und das EBS (18, 32) von der Batterie mit Strom versorgt wird, sodass die Information gesammelt werden kann.

12. Anhänger nach irgendeinem vorhergehenden Anspruch, der ferner einen Ladezustandssensor umfasst, um den Ladezustand der Batterie der Telematikeinheit (36) zu messen.

13. Anhänger nach Anspruch 8, wobei das EBS (18, 32) nicht von der Batterie der Telematikeinheit (36) mit Strom versorgt werden wird, wenn der detektierte Ladezustand der Batterie der Telematikeinheit (36) unter einem vorbestimmten Stand liegt.

14. Verfahren zur Stromversorgung eines Fahrzeuganhängers (14), der ein elektronisches Bremssystem EBS (148, 32), eine Telematikeinheit (36) mit einer Batterie, und einen Sensor aufweist, wobei das Verfahren, wenn der Anhänger (14) nicht an eine externe Quelle elektrischen Stroms angeschlossen ist, den Schritt der Bereitstellung von Strom aus der aufladbaren Batterie der Telematikeinheit (36) an das EBS (18, 32) über einen Stromanschluss umfasst, um das EBS (18, 32) mit Strom zu versorgen, **dadurch gekennzeichnet, dass** die Stromversorgung des EBS (18, 32) aus der Batterie der Telematikeinheit (36) als Antwort auf ein Signal vom Sensor ausgelöst wird.

## Revendications

1. Une remorque (14), comprenant un système d'alimentation, un système de freinage électronique - EBS - (18, 32) et une unité télématique (36) munie d'une batterie, dans laquelle une connexion d'alimentation (38) est fournie à partir de l'unité télématique (36) à l'EBS pour fournir l'alimentation à partir de la batterie de l'unité télématique (36) à l'EBS (18, 32) pour alimenter l'EBS (18, 32) quand la remorque n'est pas connectée à une source extérieure d'énergie électrique, **caractérisée en ce que** la remorque comprend en sus au moins un capteur, et l'alimentation de l'EBS (18, 32) à partir de la batterie de l'unité télématique (36) est déclenchée en réponse à un signal provenant du capteur.

2. Une remorque selon la revendication 1, comprenant en sus une commande qui peut être actionnée par un utilisateur pour déclencher l'alimentation de l'EBS (18, 32) à partir de la batterie de l'unité télématique (36).

3. Une remorque selon la revendication 1 ou 2, dans laquelle le capteur est un capteur de poids ou de charge.

4. Une remorque selon n'importe quelle revendication précédente, dans laquelle le système présente un affichage de charge qui est conçu pour afficher des informations obtenues à partir de l'EBS concernant une charge sur la remorque, l'affichage de charge pouvant être alimenté par la batterie de l'unité télématique (36).

5. Une remorque selon n'importe quelle revendication précédente, la remorque comprenant un dispositif d'alerte, qui peut fournir une alerte en réponse à un événement prédéterminé, le dispositif d'alerte pouvant être alimenté par la batterie de l'unité télématique (36).

6. Une remorque selon la revendication 5, dans laquelle l'événement prédéterminé est une augmentation ou une diminution de la charge captée par un capteur de charge de la remorque.

7. Une remorque selon n'importe quelle revendication précédente, dans laquelle l'EBS (18, 32) est alimenté par la batterie de l'unité télématique (36) en réponse à une demande reçue depuis un centre de commande externe.

8. Une remorque selon la revendication 7, dans laquelle la demande est reçue via l'unité télématique (36).

9. Une remorque selon n'importe quelle revendication précédente, dans laquelle la batterie alimente l'EBS (18, 32) de manière à ce que les informations puissent être transférées de l'EBS (18, 32) à l'unité télématique (36).

10. Une remorque selon la revendication 9, dans laquelle les informations sont stockées dans une mémoire qui est accessible par l'EBS (18, 32), et l'EBS (18, 32) est alimenté par la batterie de manière à ce que les informations puissent être récupérées.

11. Une remorque selon la revendication 9 ou 10, dans laquelle les informations sont collectées par l'EBS (18, 32) avant d'être transférées à l'unité télématique (36), et l'EBS (18, 32) est alimenté par la batterie de manière à ce que les informations puissent être collectées.

12. Une remorque selon n'importe quelle revendication précédente, comprenant en sus un capteur de niveau de charge pour mesurer le niveau de charge de la batterie de l'unité télématique (36).

13. Une remorque selon la revendication 8, dans laquelle l'EBS (18, 32) ne sera pas alimenté par la batterie de l'unité télématique (36) si le niveau de charge détecté de la batterie de l'unité télématique (36) est inférieur à un niveau prédéterminé.

14. Un procédé d'alimentation d'une remorque de véhicule (14) comprenant un système de freinage électronique - EBS - (18, 32), une unité télématique (36) munie d'une batterie, et un capteur, le procédé comprenant l'étape consistant à, quand la remorque (14) n'est pas connectée à une source extérieure d'alimentation électrique, fournir l'alimentation à partir de la batterie rechargeable de l'unité télématique (36) à l'EBS (18, 32) via une connexion d'alimentation pour alimenter l'EBS (18, 32), **caractérisé en ce que** l'alimentation de l'EBS (18, 32) à partir de la batterie de l'unité télématique (36) est déclenchée en réponse à un signal provenant du capteur.
